# EUROPÄISCHE PATENTANMELDUNG

(11) **EP 2 991 198 A1**
(43) Veröffentlichungstag der Anmeldung: **02.03.2016**
(21) Anmeldenummer: 14183047.1
(22) Anmeldetag: 01.09.2014
(51) Int. Cl.: H02K 1/32, H02K 3/24

(54) **Läufer mit Nutgrundkanal für eine rotierende elektrische Maschine**

(71) Anmelder: Siemens Aktiengesellschaft, 80333 München (DE)
(72) Erfinder: Braam, Jan-Henrik, 47546 Kalkar (DE); Evers, Christoph, 46236 Bottrop (DE); Gertz, Simon, 40229 Düsseldorf (DE); Grau Sorarrain, Esteban, 40215 Düsseldorf (DE); Haberer, Oliver, 44225 Dortmund (DE); Hagedorn, Markus, 44789 Bochum (DE); Jäkel, Christian, 47169 Duisburg (DE); Koebe, Mario, 45478 Mülheim an der Ruhr (DE); Kowalski, Matthias, 45470 Mülheim an der Ruhr (DE); Mrkulic, Omer, 46539 Dinslaken (DE); Mölders, Markus, 45472 Mülheim an der Ruhr (DE); Schild, Carolin, 45478 Mülheim an der Ruhr (DE)

(57) **Zusammenfassung**

Die Erfindung betrifft einen Läufer (1) für eine rotierende elektrische Maschine, insbesondere einen Turbogenerator, aufweisend einen Läuferballen (2) mit mehreren am Umfang verteilten und parallel zueinander angeordneten, in axialer Richtung verlaufenden Wicklungsnuten (3) mit jeweils zumindest einem radial innen angeordneten Nutgrundkanal (4) zum Führen eines Kühlgases, wobei dieser Nutgrundkanal (4) zumindest teilweise gegenüber dem Läuferballen thermisch isoliert, z.B. durch eine Isolationsschicht aus Lack (10), ist.

## Beschreibung

Die Erfindung betrifft einen Läufer für eine rotierende elektrische Maschine, insbesondere einen Turbogenerator, aufweisend einen Läuferballen mit mehreren umfangsverteilt und parallel zueinander angeordneten, axial verlaufenden Wicklungsnuten mit jeweils zumindest einem radial innen angeordneten Nutgrundkanal zum Führen eines Kühlgases.

Des Weiteren betrifft die Erfindung eine rotierende elektrische Maschine, insbesondere einen Turbogenerator, aufweisend einen Ständer und einen Läufer.

Ferner betrifft die Erfindung ein Verfahren zum Herstellen eines Läuferballens eines Läufers für eine rotierende elektrische Maschine, insbesondere einen Turbogenerator, wobei an einem Läuferballenausgangskörper mehrere umfangsverteilt und parallel zueinander angeordnete, axial verlaufende Wicklungsnuten mit jeweils zumindest einem radial innen angeordneten Nutgrundkanal zum Führen eines Kühlgases ausgebildet werden.

Ein Läufer eines Turbogenerators umfasst einen Läuferballen mit mehreren umfangsverteilt und parallel zueinander angeordneten, axial verlaufenden Wicklungsnuten. In den Wicklungsnuten sind axiale Aktivteile einer Läuferwicklung angeordnet, die üblicherweise durch mehrere gegeneinander elektrisch isolierte Kupferleiter gebildet sind. Die in den Wicklungsnuten angeordneten axialen Aktivteile der Läuferwicklung werden herkömmlich über Nutverschlusskeile an dem Läuferballen fixiert. An axialen Enden des Läuferballens sind die axialen Aktivteile der Läuferwicklung über tangentiale Abschnitte der Läuferwicklung verschiedener Wicklungsnuten elektrisch leitend miteinander verbunden, um eine Läuferspule aufzubauen. Die tangentialen Abschnitte der Läuferwicklung bilden an jedem axialen Ende des Läuferballens einen Läuferwickelkopf.

Zur Erzeugung eines Magnetfelds wird die Läuferwicklung von einem elektrischen Gleichstrom durchströmt.

Um die Auslastbarkeit eines Läufers bzw. einer damit ausgestatteten rotierenden elektrischen Maschine zu erhöhen, können die Läuferwicklungen gekühlt werden. Hierzu ist es bekannt, die Wicklungsnuten radial innen mit jeweils einem axial verlaufenden Nutgrundkanal zu versehen. Durch einen solchen Nutgrundkanal kann ein Kühlgas geleitet werden, das aus einem Läuferwickelkopfbereich in den Nutgrundkanal einströmt, in axialer Richtung durch den Nutgrundkanal strömt und über eine Vielzahl verteilter Radialschlitze in der in der jeweiligen Wicklungsnut befindlichen Läuferwicklung und dem diese Wicklungsnut verschließenden Nutverschlusskeil aus dem Läuferballen ausströmt.

Aufgabe der Erfindung ist, die Kühlung einer Läuferwicklung eines Läufers einer rotierenden elektrischen Maschine zu verbessern und hierdurch die Auslastbarkeit der rotierenden elektrischen Maschine zu erhöhen.

Der erfindungsgemäße Läufer für eine rotierende elektrische Maschine, insbesondere einen Turbogenerator, umfasst einen Läuferballen mit mehreren umfangsverteilt und parallel zueinander angeordneten, axial verlaufenden Wicklungsnuten mit jeweils zumindest einem radial innen angeordneten Nutgrundkanal zum Führen eines Kühlgases, wobei wenigstens ein Nutgrundkanal zumindest teilweise gegenüber dem Läuferballen thermisch isoliert ist.

Durch die erfindungsgemäße teilweise oder vollständige thermische Isolierung des Nutgrundkanals gegenüber dem Läuferballen kann weitestgehend verhindert werden, dass Wärme von dem im Betrieb einer rotierenden elektrischen Maschine durch elektrische und reibungsbedingte Verluste, insbesondere Oberflächenverluste, erwärmten Läuferballen in den Nutgrundkanal gelangt und dort das in dem Nutgrundkanal strömende Kühlgas erwärmt. Eine solche Erwärmung des Kühlgases würde zwangsläufig mit einer verminderten Kühlwirkung des Kühlgases einhergehen. Diese Verminderung der Kühlwirkung des Kühlgases würde dazu führen, dass über das Kühlgas weniger Wärme aus dem in der Wicklungsnut angeordneten axialen Aktivteil der Läuferwicklung abgeführt werden könnte. Die hierdurch bedingte Einschränkung der Auslastbarkeit des Läufers bzw. einer damit ausgestatteten rotierenden elektrischen Maschine kann mit dem erfindungsgemäßen Läufer beseitigt werden. Besonders vorteilhaft ist der Einsatz des erfindungsgemäßen Läufers bei rotierenden elektrischen Maschinen, deren Leistung durch einen Hot-Spot im Läuferballen des Läufers begrenzt ist, da durch den Einsatz des erfindungsgemäßen Läufers die Leistung einer solchen rotierenden elektrischen Maschine erhöht werden kann.

Im Rahmen der Erfindung können auch mehrere, insbesondere alle, Nutgrundkanäle jeweils zumindest teilweise gegenüber dem Läuferballen thermisch isoliert sein. Insbesondere können in der Nähe einer Polregion des Läufers angeordnete Nutgrundkanäle zumindest teilweise gegenüber dem Läuferballen thermisch isoliert sein.

Der Nutgrundkanal ist bevorzugt über wenigstens eine an zumindest einem Teil eines den Nutgrundkanal einfassenden Nutabschnitts des Läuferballens angeordnete thermische Isolationsschicht gegenüber dem Läuferballen thermisch isoliert. Hierbei kann die thermische Isolationsschicht an dem Nutabschnitt des Läuferballens fixiert sein. Die Isolierwirkung der thermischen Isolationsschicht kann über deren Werkstoff und Formgebung, insbesondere deren Materialdicke, an den jeweiligen Anwendungsfall angepasst werden.

Der Nutabschnitt ist bevorzugt zumindest teilweise mit der thermischen Isolationsschicht beschichtet. Hierzu können je nach Werkstoff für die thermische Isolationsschicht verschiedene Beschichtungsverfahren eingesetzt werden. Nach dieser Ausgestaltung ist die thermische Isolationsschicht stoffschlüssig mit dem Läuferballen verbunden. Alternativ oder zusätzlich kann eine formschlüssige Verbindung zwischen der thermischen Isolationsschicht und dem Läuferballen vorhanden sein.

Bevorzugt ist die thermische Isolationsschicht ein Lack. Dies ermöglicht ein einfaches Auftragen der thermischen Isolationsschicht auf den Nutabschnitt des Läuferballens.

Bevorzugt sind ausschließlich solche Nutgrundkanäle zumindest teilweise gegenüber dem Läuferballen thermisch isoliert, bei denen eine Temperatur des diese Nutgrundkanäle durchströmenden Kühlgases niedriger als eine Betriebstemperatur eines an die Nutgrundkanäle jeweilig angrenzenden Ballenabschnitts des Läuferballens ist. Hierdurch wird die Kühlwirkung des in den entsprechenden Nutgrundkanälen strömenden Kühlgases deutlich optimiert.

Die erfindungsgemäße rotierende elektrische Maschine, insbesondere Turbogenerator, umfasst einen Ständer und einen Läufer, wobei der Läufer gemäß einer der vorgenannten Ausgestaltungen oder einer beliebigen Kombination derselben ausgebildet ist.

Mit der rotierenden elektrischen Maschine sind die oben mit Bezug auf den Läufer genannten Vorteile entsprechend verbunden.

Nach dem erfindungsgemäßen Verfahren zum Herstellen eines Läuferballens eines Läufers für eine rotierende elektrische Maschine, insbesondere einen Turbogenerator, werden an einem Läuferballenausgangskörper mehrere umfangsverteilt und parallel zueinander angeordnete, axial verlaufende Wicklungsnuten mit jeweils zumindest einem radial innen angeordneten Nutgrundkanal zum Führen eines Kühlgases ausgebildet, wobei an wenigstens einem einen Nutgrundkanal einfassenden Nutabschnitt des Läuferballenausgangskörpers zumindest teilweise eine thermische Isolationsschicht angeordnet wird.

Mit diesem Verfahren sind die oben mit Bezug auf den Läufer genannten Vorteile entsprechend verbunden. Es kann auch an mehreren, insbesondere allen, jeweils einen Nutgrundkanal einfassenden Nutabschnitten des Läuferballenausgangskörpers jeweils zumindest teilweise eine thermische Isolationsschicht angeordnet sein.

Die thermische Isolationsschicht wird bevorzugt unter Verwendung eines Beschichtungsverfahrens an dem Nutabschnitt angeordnet. Hierdurch kann beispielsweise ein Lack auf den Nutabschnitt aufgetragen werden, um die thermische Isolationsschicht auszubilden.

Im Folgenden wird eine bevorzugte Ausführungsform des erfindungsgemäßen Läufers anhand der beigefügten schematischen Zeichnung erläutert. Es zeigt:

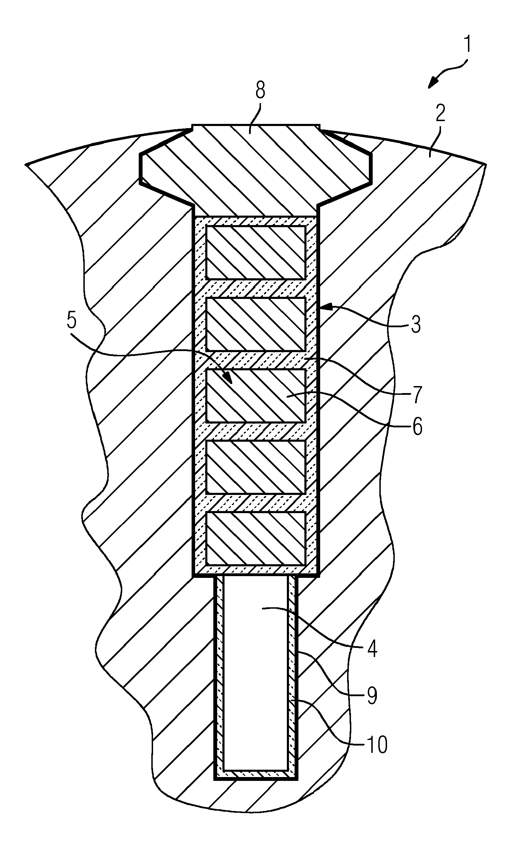

Fig. 1 eine schematische Querschnittdarstellung eines Ausführungsbeispiels für einen erfindungsgemäßen Läufer im Bereich einer Wicklungsnut.

Figur 1 zeigt eine schematische Querschnittdarstellung eines Ausführungsbeispiels für einen erfindungsgemäßen Läufer 1 für eine nicht näher gezeigte rotierende elektrische Maschine. Der Läufer 1 umfasst einen Läuferballen 2 mit mehreren umfangsverteilt und parallel zueinander angeordneten, axial verlaufenden Wicklungsnuten 3, von denen in Figur 1 lediglich eine Wicklungsnut 3 gezeigt ist. Jede Wicklungsnut 3 umfasst einen radial innen angeordneten Nutgrundkanal 4 zum Führen eines Kühlgases.

In der Wicklungsnut 3 ist ein axiales Aktivteil 5 der Läuferwicklung angeordnet, das aus fünf Teilleitern 6 gebildet ist. Das axiale Aktivteil 5 ist von einer elektrischen Isolierung 7 umgeben, die auch zwischen den einzelnen Teilleitern 6 verläuft. Radial außen ist die Wicklungsnut 3 mit einem Nutverschlusskeil 8 verschlossen.

Der gezeigte Nutgrundkanal 4 ist vollständig gegenüber dem Läuferballen 2 thermisch isoliert ist, wozu an einem den Nutgrundkanal 4 einfassenden Nutabschnitt 9 des Läuferballens 2 eine thermische Isolationsschicht 10 angeordnet, mit welcher der Nutabschnitt 9 beschichtet ist. Die thermische Isolationsschicht 10 ist ein Lack.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Läufer (1) für eine rotierende elektrische Maschine, insbesondere einen Turbogenerator, aufweisend einen Läuferballen (2) mit mehreren umfangsverteilt und parallel zueinander angeordneten, axial verlaufenden Wicklungsnuten (3) mit jeweils zumindest einem radial innen angeordneten Nutgrundkanal (4) zum Führen eines Kühlgases, wobei wenigstens ein Nutgrundkanal (4) zumindest teilweise gegenüber dem Läuferballen (2) thermisch isoliert ist.

2. Läufer (1) gemäß Anspruch 1,
wobei der Nutgrundkanal (4) über wenigstens eine an zumindest einem Teil eines den Nutgrundkanal (4) einfassenden Nutabschnitts (9) des Läuferballens (2) angeordnete thermische Isolationsschicht (10) gegenüber dem Läuferballen (2) thermisch isoliert ist.

3. Läufer (1) gemäß Anspruch 2,
wobei der Nutabschnitt (9) zumindest teilweise mit der thermischen Isolationsschicht (10) beschichtet ist.

4. Läufer (1) gemäß Anspruch 3,
wobei die thermische Isolationsschicht (10) ein Lack ist.

5. Läufer (1) gemäß einem der Ansprüche 1 bis 4,
wobei ausschließlich solche Nutgrundkanäle (4) zumindest teilweise gegenüber dem Läuferballen (2) thermisch isoliert sind, bei denen eine Temperatur des diese Nutgrundkanäle (4) durchströmenden Kühlgases niedriger als eine Betriebstemperatur eines an die Nutgrundkanäle (4) jeweilig angrenzenden Ballenabschnitts des Läuferballens (2) ist.

6. Rotierende elektrische Maschine,
insbesondere Turbogenerator, aufweisend einen Ständer und einen Läufer (1), wobei der Läufer (1) gemäß einem der Ansprüche 1 bis 5 ausgebildet ist.

7. Verfahren zum Herstellen eines Läuferballens (2) eines Läufers (1) für eine rotierende elektrische Maschine, insbesondere einen Turbogenerator, wobei an einem Läuferballenausgangskörper mehrere umfangsverteilt und parallel zueinander angeordnete, axial verlaufende Wicklungsnuten (3) mit jeweils zumindest einem radial innen angeordneten Nutgrundkanal (4) zum Führen eines Kühlgases ausgebildet werden, wobei an wenigstens einem einen Nutgrundkanal (4) einfassenden Nutabschnitt (9) des Läuferballenballenkörpers zumindest teilweise eine thermische Isolationsschicht (10) angeordnet wird.

8. Verfahren gemäß Anspruch 7,
wobei die thermische Isolationsschicht (10) unter Verwendung eines Beschichtungsverfahrens an dem Nutabschnitt (9) angeordnet wird.
